# EUROPÄISCHE PATENTSCHRIFT

(11) **EP 3 906 392 B1**
(45) Veröffentlichungstag und Bekanntmachung des Hinweises auf die Patenterteilung: **25.01.2023**
(21) Anmeldenummer: 20707000.4
(22) Anmeldetag: 17.02.2020
(51) Int. Cl.: G01D 11/24, G01D 11/30

(54) **POSITIONSBESTIMMUNG IN EINEM HOCHDRUCKRAUM**
POSITION DETERMINING IN A HIGH PRESSURE AREA
DÉTERMINATION DE LA POSITION DANS UN ESPACE HAUTE PRESSION

(30) Priorität: 29.03.2019 EP 19166193
(43) Veröffentlichungstag der Anmeldung: 10.11.2021
(73) Patentinhaber: Siemens Aktiengesellschaft, 80333 München (DE)
(72) Erfinder: BURGHARD, Matthias Johannes, 12099 Berlin (DE); DENK, Joachim, 10781 Berlin (DE); FESTA, Marco, 14612 Falkensee (DE)
(86) Internationale Anmeldenummer: PCT/EP2020/054039
(87) Internationale Veröffentlichungsnummer: WO 2020/200564

(56) Entgegenhaltungen:
- US-A- 3 859 847
- US-A- 4 066 949

## Beschreibung

Die Erfindung betrifft eine Vorrichtung zur Bestimmung einer Position eines in einem Hochdruckraum bewegbaren Objekts. Die Erfindung betrifft weiterhin eine Verwendung der Vorrichtung.

Derartige Vorrichtungen sind aus dem Stand der Technik bekannt. Zum Beispiel werden zur Positionsbestimmung gasgekühlter Elektromotoren Sensoren mit flexiblen elektrischen Leitungen verwendet. Die flexiblen Leitungen bestehen beispielsweise aus einer Anordnung mehrerer bis vieler dünner Drähte, die miteinander verseilt sind (auch als Litze bezeichnet). Die Litze ist zur elektrischen Isolation von einem Isolator umgeben. Zwischen den Drähten einer Litze sowie zwischen dem Isolator und der Litze bilden sich üblicherweise Hohlräume aus, die mit Luft gefüllt sind. Wird eine derartige flexible Leitung in einer Gasatmosphäre, insbesondere in einem Hochdruckraum, betrieben, kann Gas in die Hohlräume aufgrund von Diffusionsvorgängen eindringen, bis ein Gasdruck im Hohlraum gleich dem Gasdruck der äußeren Gasatmosphäre ist.

Bei einer Druckabsenkung im Hochdruckraum sinkt der Gasdruck in den beschriebenen Hohlräumen nur sehr langsam ab, solange dieser Vorgang weiterhin auf Diffusion beruht. Dieser Differenzdruck kann die Isolierung der flexiblen Leitung beschädigen. Zur Verringerung eines Risikos einer solchen Beschädigung können die Leitungen beispielsweise innerhalb eines Elastomerschlauchs oder eines metallischen Wellschlauchs angeordnet werden, wobei die Schläuche mit Flüssigkeit gefüllt werden. Des Weiteren ist der Einsatz von Tauchrohren bekannt, wobei sich an einem Ende eines Tauchrohrs der Sensor befindet und dessen Leitungen in einem Niederdruckbereich innerhalb des Tauchrohrs verlegt sind.

US 4 066 949 A offenbart eine Sondenhalteranordnung mit einem Sondenhalter, der freitragend in einer Stützstruktur montiert ist. Die Stützstruktur umfasst ein im Allgemeinen längliches zylindrisches Gehäuse. Ein längliches freies Ende des Halters erstreckt sich im Wesentlichen koaxial innerhalb des Gehäuses. Der Halter weist ein Paar beabstandeter, sich in Umfangsrichtung erstreckender Nuten auf, die an seiner Außenfläche in der Nähe des freien Endes des Halters ausgebildet sind. In jeder der Nuten ist ein elastischer Ring angeordnet, wobei die Außenfläche jedes Rings mit der Innenfläche eines Gehäuseabschnitts in Kontakt steht, um eine elastische Stützstruktur für den Halter innerhalb des Gehäuses zu bilden.

US 3 859 847 A offenbart eine Vibrationsüberwachungsvorrichtung mit einem Wellenreiter zum Überwachen der radialen Vibrationsbewegung einer rotierenden Welle. Der Wellenreiter ist mit einer Schraubenfeder gegen den Umfang der Welle vorgespannt. An dem Wellenreiter ist nahe der Welle ein Beschleunigungsmesser zum Messen der Vibrationen angeordnet. Ein Beschleunigungssignal wird von dem Beschleunigungsmesser an ein Elektronikmodul am oberen oder äußeren Teil eines Lagerdeckels übertragen, in dem der Wellenreiter, die Schraubenfeder und der Beschleunigungsmesser angeordnet sind.

Der Erfindung liegt die Aufgabe zugrunde, eine gegenüber dem Stand der Technik verbesserte Vorrichtung zur Bestimmung einer Position eines in einem Hochdruckraum bewegbaren Objekts anzugeben. Der Erfindung liegt weiterhin die Aufgabe zu Grunde, eine Verwendung für die Vorrichtung anzugeben.

Hinsichtlich der Vorrichtung wird die Aufgabe erfindungsgemäß mit den in Anspruch 1 angegebenen Merkmalen gelöst. Hinsichtlich der Verwendung wird die Aufgabe erfindungsgemäß mit den in Anspruch 11 angegebenen Merkmalen gelöst.

Vorteilhafte Ausgestaltungen der Erfindung sind Gegenstand der Unteransprüche.

Eine erfindungsgemäße Vorrichtung zur Bestimmung einer Position eines in einem Hochdruckraum bewegbaren Objekts umfasst eine Erfassungseinheit mit mindestens einem Sensor zur Erfassung der Position des Objekts und Ausgabe eines die Position des Objekts signalisierenden Positionssignals und eine Sensorleitung zur Weiterleitung des Positionssignals an eine Auswerteeinheit, welche insbesondere in einem außerhalb des Hochdruckraums befindlichen Niederdruckraum angeordnet ist. Die Vorrichtung umfasst weiterhin eine Trägereinheit zur Aufnahme der Erfassungseinheit. Der Sensor ist hierbei an einem dem Objekt zugewandten und ortsfest im Hochdruckraum angeordneten Ende der Trägereinheit angeordnet, wobei die Trägereinheit einen flexiblen Bereich aufweist, welcher zwischen dem ortsfesten Ende und einem durch ein den Hochdruckraum begrenzendes Gehäuse geführten Bereich angeordnet ist, und wobei die Sensorleitung der Erfassungseinheit durch den flexiblen Bereich und durch den durch das Gehäuse verlaufenden Bereich aus dem Hochdruckraum heraus geführt ist.

Die erfindungsgemäße Vorrichtung verwendet das sogenannte Tauchrohrprinzip, wobei die als Tauchrohr ausgebildete Trägereinheit in drei Bereiche eingeteilt ist.

Ein erster Bereich umfasst das ortsfeste Ende mit dem Sensor, welche zur Erfassung der Position des Objekts, insbesondere der absoluten Position des Objekts im Hochdruckraum, vorgesehen ist und welcher gleichzeitig eine Druckbarriere zwischen dem Hochdruckraum und einem Innenraum der Trägereinheit bildet. Der Innenraum der Trägereinheit bildet somit einen Niederdruckbereich. Der Sensor umfasst beispielsweise einen Sensorkopf und einen Sensorträger, wobei der Sensorträger den Sensorkopf aufnimmt. Der Sensorträger ist mit dem Sensorkopf möglichst nah an einer Oberfläche des Objekts positioniert und ortsfest im Hochdruckraum angeordnet. Bei der beschriebenen Vorrichtung ist somit der Sensorkopf im Hochdruckraum positioniert, wobei die Sensorleitungen im Niederdruckbereich verlaufen.

Ein zweiter Bereich umfasst den flexiblen Bereich und ist zwischen dem ersten und einem dritten Bereich angeordnet. In dem flexiblen Bereich sind die Sensorleitungen angeordnet, welche über den dritten Bereich aus dem Gehäuse herausgeführt werden. Der flexible Bereich ermöglicht eine mechanische Flexibilität der Sensorleitungen, ohne dass die absolute Position des Sensors im Hochdruckraum sowie eine Position des dritten Bereichs verändert werden.

Der dritte Bereich ist wie der erste Bereich ortsfest, insbesondere ortsfest in Bezug auf das Gehäuse, und dient einer Abdichtung der Trägereinheit im Gehäuse.

Die derart ausgebildete Vorrichtung ermöglicht präzise Messungen einer absoluten Position des Objekts im Hochdruckraum. Thermische Längenänderungen der Trägereinheit haben aufgrund des flexiblen Bereichs keinen oder zumindest nur einen vernachlässigbar geringen Einfluss auf die Positionserfassung. Zudem werden mittels des flexiblen Bereichs Übertragungen von Vibrationen aus dem Bereich des Gehäuses auf den Sensor verringert. Darüber hinaus ermöglicht die Vorrichtung eine einfache Montage/Demontage des Sensors durch eine Öffnung im Gehäuse, durch welche der dritte Bereich der Trägereinheit hindurchgeführt ist. Zusätzliche Öffnungen zur Montage/Demontage sind nicht erforderlich.

In einer Ausführungsform bildet der flexible Bereich in Bezug auf seine Länge eine Zugfeder oder Druckfeder. Der flexible Bereich kann sich somit verkürzen oder verlängern, wobei die absolute Position des den Sensor aufnehmenden ortsfesten Endes der Trägereinheit im Hochdruckraum sowie die Position der Trägereinheit im Gehäuse unverändert bleiben. Damit kann ein thermischer Einfluss, insbesondere eine thermische Längenänderung der Trägereinheit, auf den Sensor kompensiert werden.

Beispielsweise verläuft der flexible Bereich ausgehend vom ortsfesten Ende geradlinig in Richtung des Gehäuses und weist ein mechanisch flexibles Material auf. Insbesondere ist ein Material einer Mantelfläche, welche den inneren Niederdruckbereich der Trägereinheit begrenzt, aus einem mechanisch flexiblen Material gebildet. Der flexible Bereich kann sich mittels des Materials unter thermischer Beeinflussung ausdehnen oder verkürzen. Beispielsweise dehnt sich das Material bei Wärme aus und zieht sich bei Wärmeentzug entsprechend zusammen. Dazu ist die Trägereinheit beispielsweise als metallisches Wellrohr ausgebildet. Die innerhalb des flexiblen Bereichs verlaufende Sensorleitung sowie die ortsfesten Positionen der anderen Bereiche der Trägereinheit werden davon nicht beeinflusst.

Bei einer Ausführung gemäß der Erfindung, wie definiert in Anspruch 1, ist der flexible Bereich durch einen als Rohrspirale ausgebildeten Abschnitt eines Führungsrohrs gebildet, durch den die Sensorleitung geführt ist, wobei der als Rohrspirale ausgebildete Abschnitt um ein und/oder in einem Trägerrohr, insbesondere um ein starres und/oder in einem starren Trägerrohr, angeordnet sein kann. Der als Rohrspirale ausgebildete Abschnitt ermöglicht eine elastische Struktur in einer kompakten Konfiguration. Das Trägerrohr dient der Sicherstellung der ortsfesten Position des Sensors im Hochdruckraum.

Der als Rohrspirale ausgebildete Abschnitt ist insbesondere flexibel am und/oder im Trägerrohr befestigt. Beispielsweise ist der Abschnitt mittels Klammern oder Stegen am und/oder im Trägerrohr befestigt, wodurch auf das Trägerrohr übertragene Vibrationen kompensiert werden können. Das diesen Abschnitt umfassende Führungsrohr kann dabei entweder teilweise um das Trägerrohr herum oder vollständig innerhalb des Trägerrohrs angeordnet sein. Beispielsweise sind die jeweiligen Enden des Führungsrohrs, welche nicht spiralförmig ausgebildet sind, innerhalb des Trägerrohrs angeordnet. Der als Rohrspirale ausgebildete Abschnitt ist außerhalb des Trägerrohrs um dieses herum angeordnet. Das Trägerrohr umfasst entsprechende Öffnungen oder Aussparungen zur Hindurchführung des Führungsrohrs. Ist das Führungsrohr vollständig innerhalb des Trägerrohrs angeordnet, kann ein Durchmesser des Trägerrohrs im Bereich des als Rohrspirale ausgebildeten Abschnitts größer als in den anderen Bereichen sein. Im Bereich des Sensors kann sich der Durchmesser des Trägerrohrs aus Platzgründen verjüngen. Zudem kann in diesem Fall auf Öffnungen oder Aussparungen im Trägerrohr verzichtet werden.

In einem Ausführungsbeispiel ist an einem Ende des Führungsrohrs der Sensor befestigt, wobei dieses Ende innerhalb des Trägerrohrs angeordnet ist. Dies ermöglicht eine Befestigung des Sensors und Sicherstellung der ortsfesten Position.

Die Befestigung des Sensors mit dem Führungsrohr kann mittels Schweißen, Kleben oder Verschrauben, insbesondere mittels einer Schneidringverschraubung, erfolgen. Der Sensor kann sich alternativ auch im Inneren einer Kammer befinden, wobei der Sensorkopf aus dieser Kammer herausragt und wobei der Sensor nicht direkt mit dem Führungsrohr verschweißt ist.

Das eine Ende des Führungsrohrs wird beispielsweise an einer bestimmten Stelle in die Kammer eingeführt und beispielsweise mittels einer hochdruckfesten Verschraubung, z. B. eine Schneid- oder Klemmringverschraubung, abgedichtet. Hierbei wirkt auf eine im Gehäuse angeordnete Sensorkopfrückseite ein Druck, welcher äquivalent zu einem innerhalb des Führungsrohrs herrschenden Druck, insbesondere einem Druck der Umgebungsluft, ist.

In einem weiteren Ausführungsbeispiel ist das Trägerrohr federbelastet. Damit wird eine einfache Montage der Vorrichtung ermöglicht, da eine mechanische Verbindung des Sensors mit dem Sensorträger nicht erforderlich ist. Der Sensor wird mittels des federbelasteten Trägerrohrs auf den Sensorträger gedrückt. Beispielsweise wird dazu ein dem Sensor abgewandtes Ende des Trägerrohrs mit einer Federkraft beaufschlagt, wobei die Federkraft mittels einer Feder, z. B. eine Torsionsfeder, erzeugt wird. Die Feder ist mittels einer Federspannmutter spannbar.

In einer Ausführungsform ist das Führungsrohr durch das Gehäuse hindurch geführt und mittels eines Flansches form- und/oder kraft- und/oder stoffschlüssig mit dem Gehäuse verbunden. Das Führungsrohr ist dabei nicht direkt mit dem Gehäuse verbunden, sondern am Flansch befestigt, welcher mit dem Gehäuse verbunden, z. B. verschraubt, ist. Beispielsweise ist das Führungsrohr mit dem Flansch verschraubt. Alternativ kann das Führungsrohr auch mit dem Flansch verschweißt sein. Mittels der Befestigung des Führungsrohrs am Flansch kann der Sensor bei geschlossenem Gehäuse montiert/demontiert werden.

Insbesondere ist der Flansch gegenüber dem Gehäuse abgedichtet. Beispielsweise wird dazu ein Dichtmaterial auf einer Oberflächenseite des Flansches und/oder dem Gehäuse aufgebracht. Als Dichtmaterial eignet sich Graphit, welches eine hohe Temperaturbeständigkeit, eine hohe Medienbeständigkeit und eine hohe Montagesicherheit ermöglicht.

Die Erfindung sieht weiterhin eine Verwendung der erfindungsgemäßen Vorrichtung zur Bestimmung einer Position einer in einem Hochdruckraum rotierbaren, magnetisch gelagerten Welle vor. Beispielsweise ist die Welle Bestandteil eines gasgekühlten Elektromotors oder Generators. Die Welle kann weiterhin Bestandteil einer Maschine sein, in deren Gehäuse aggressives Gas, Flüssigkeiten oder Partikelströme vorhanden sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Schnittdarstellung eines Ausführungsbeispiels einer Vorrichtung zur Bestimmung einer Position eines in einem Hochdruckraum bewegbaren Objekts,
- FIG 2: schematisch eine Schnittdarstellung eines alternativen Ausführungsbeispiels der Vorrichtung und
- FIG 3: schematisch eine Schnittdarstellung eines vergrößerten Ausschnitts eines weiteren alternativen Ausführungsbeispiels der Vorrichtung.

Einander entsprechende Teile sind in den Figuren mit den gleichen Bezugszeichen versehen.

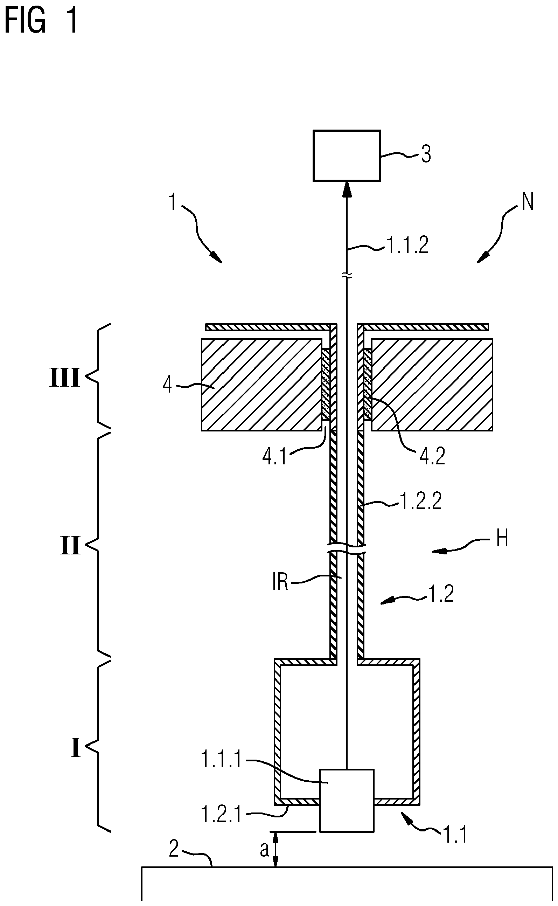

Figur 1 zeigt eine Schnittdarstellung einer Vorrichtung 1 zur Bestimmung einer Position eines in einem Hochdruckraum H bewegbaren Objekts 2.

Die Vorrichtung 1 dient insbesondere der Bestimmung einer absoluten Position des Objekts 2 in einer Hochdruck-Gasatmosphäre. Das Objekt 2 ist beispielsweise eine rotierbare, magnetisch gelagerte Welle, die Bestandteil eines gasgekühlten Elektromotors oder Generators ist. Denkbar ist auch, dass das Objekt 2 Bestandteil einer Maschine ist, die im Hochdruckraum H aggressiven Gasen, Flüssigkeiten oder Partikelströmen ausgesetzt ist. Die Bestimmung der Position des Objekts 2 im Hochdruckraum H dient einem optimalen Betrieb des Elektromotors/Generators oder der Maschine sowie anderen mit diesen gekoppelten Bauteilen und/oder Funktionen.

Die in Figur 1 gezeigte Vorrichtung 1 umfasst eine Erfassungseinheit 1.1 und eine Trägereinheit 1.2. Die Erfassungseinheit 1.1 umfasst einen Sensor 1.1.1, welcher der Erfassung eines Positionssignals des Objekts 2 im Hochdruckraum H dient. Der Sensor 1.1.1 kann als ein induktiver Sensor, kapazitiver Sensor, optischer Sensor, ein Ultraschallsensor, ein Magnetsensor und dgl. mehr ausgebildet sein. Insbesondere ist der Sensor 1.1.1 ein Wirbelstromsensor. Dabei ist mittels des Sensors 1.1.1 eine berührungslose, dynamische Erfassung der absoluten Position des Objekts 2 im Hochdruckraum H möglich.

Die Erfassungseinheit 1.1 umfasst weiterhin eine Sensorleitung 1.1.2 zur Weiterleitung des Positionssignals an eine Auswerteeinheit 3. Die Auswerteeinheit 3 ist beispielsweise ein Steuergerät und gemäß dem vorliegenden Ausführungsbeispiel in einem Niederdruckraum N und damit außerhalb des Hochdruckraums H angeordnet.

Die Sensorleitung 1.1.2 umfasst beispielsweise in nicht näher dargestellter Art und Weise eine Anordnung mehrerer bis vieler dünner Drähte, die miteinander zu einer sogenannten Litze verbunden, insbesondere verseilt sind. Ist die Sensorleitung 1.1.2 eine Koaxialleitung, umfasst diese mindestens einen weiteren Leiter, welcher konzentrisch um die isolierte Litze angeordnet ist. Der weitere Leiter ist ebenfalls als eine mehrdrahtige Litze ausgeführt. Dies ermöglicht eine mechanische Flexibilität der Sensorleitung 1.1.2.

Zwischen den Drähten der Litze sowie zwischen dem Isolator und der Litze bilden sich üblicherweise Hohlräume aus, die mit Luft gefüllt sind. Wird die Sensorleitung 1.1.2 in einer Gasatmosphäre, insbesondere im Hochdruckraum H, betrieben, kann Gas in die Hohlräume aufgrund von Diffusionsvorgängen eindringen, bis ein Gasdruck im Hohlraum gleich dem Gasdruck der äußeren Gasatmosphäre, also im Hochdruckraum H, ist.

Bei einer Druckabsenkung im Hochdruckraum H sinkt der Gasdruck in den Hohlräumen nur sehr langsam ab, solange dieser Vorgang weiterhin auf Diffusion beruht. Dieser Differenzdruck kann die Isolierung der Sensorleitung 1.1.2 beschädigen. Zur Verringerung eines Risikos einer solchen Beschädigung wird die Sensorleitung 1.1.2 in der Trägereinheit 1.2 aus dem Gehäuse 4 herausgeführt.

Die Trägereinheit 1.2 ist als ein Tauchrohr ausgebildet und umfasst drei Bereiche I, II, III.

In einem ersten Bereich I der Trägereinheit 1.2 ist der Sensor 1.1.1 angeordnet, welcher neben der Positionserfassung der Ausbildung einer Druckbarriere zwischen dem Hochdruckraum H und einem Innenraum IR der Trägereinheit 1.2 vorgesehen ist. Der Innenraum IR der Trägereinheit 1.2 bildet hierbei gegenüber dem Hochdruckraum H einen Niederdruckbereich.

Der Sensor 1.1.1 ist an einem freien Ende 1.2.1 der Trägereinheit 1.2 angeordnet, insbesondere befestigt, und ragt aus diesem in Richtung des Objekts 2 heraus. Insbesondere ist der Sensor 1.1.1 mit einem Abstand a zum Objekt 2 angeordnet, so dass das Positionssignal berührungslose erfasst wird.

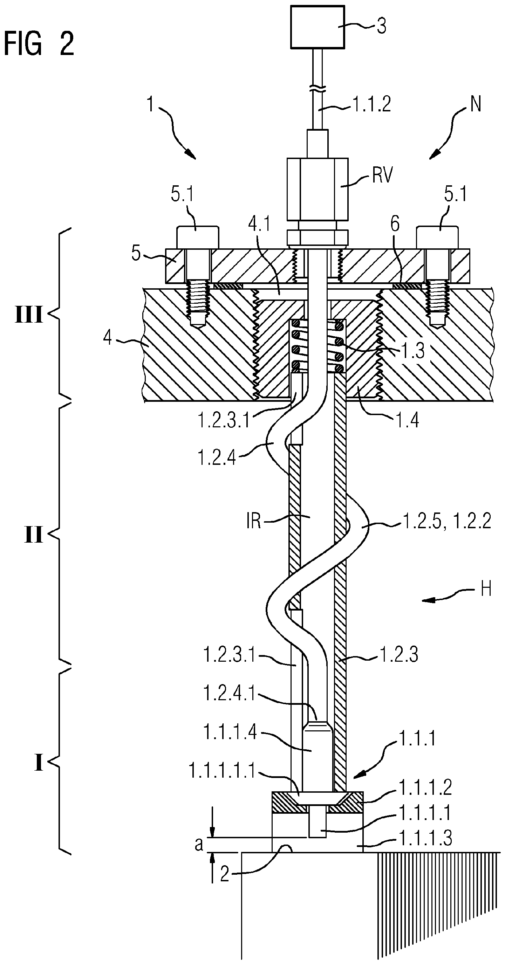

Das den Sensor 1.1.1 aufnehmende freie Ende 1.2.1 der Trägereinheit 1.2 ist weiterhin ortsfest im Hochdruckraum H. Insbesondere ist der Sensor 1.1.1 fest in einem in Figur 2 näher dargestellten und beschriebenen Sensorträger 1.1.1.2 aufgenommen, insbesondere aufgepresst oder verschraubt. Somit ist eine absolute Position des Sensors 1.1.1 im Hochdruckraum H fixiert. Die Sensorleitung 1.1.2 verläuft im Niederdruckbereich der Trägereinheit 1.2. Damit können Gasdiffusionsvorgänge, wie zuvor beschrieben, vermieden oder zumindest signifikant verringert werden.

In einem zweiten Bereich II ist die Trägereinheit 1.2 gegenüber dem ersten Bereich I und einem dritten Bereich III mechanisch flexibel ausgebildet. Mit anderen Worten: Die Trägereinheit 1.2 umfasst einen flexiblen Bereich 1.2.2, welcher zwischen dem Sensor 1.1.1 und einem den Hochdruckraum H begrenzenden Gehäuse 4, z. B. ein Elektromotorgehäuse, angeordnet ist. Des Weiteren ist in dem flexiblen Bereich 1.2.2 die Sensorleitung 1.1.2 angeordnet, welche über den dritten Bereich III aus dem Hochdruckraum H herausgeführt wird.

Zur flexiblen Ausbildung der Trägereinheit 1.2 im zweiten Bereich II umfasst diese ein mechanisch flexibles Material, welches thermische Längenänderungen der Vorrichtung 1 kompensiert. Dazu ist die Trägereinheit 1.2 beispielsweise als metallisches Wellrohr ausgebildet. Damit verhält sich der flexible Bereich 1.2.2 entsprechend einer Zugfeder oder Druckfeder, ohne dass die absolute Position des Sensors 1.1.1 im Hochdruckraum H verändert wird. Insbesondere werden eine Position des Sensors 1.1.1 sowie eine Position der Trägereinheit 1.2 im dritten Bereich III bei Längenänderung des flexiblen Bereichs 1.2.2 nicht oder nur vernachlässigbar gering verändert. Die Trägereinheit 1.2 weist im ersten und dritten Bereich I, III ein möglichst starres Material, z. B. ein Metall oder Kunststoff, auf.

Im dritten Bereich III wird die Trägereinheit 1.2 aus dem Gehäuse 4 herausgeführt. Dazu umfasst das Gehäuse 4 eine Aussparung 4.1 mit einem Dichtbereich 4.2, welcher die Trägereinheit 1.2 im Gehäuse 4 abdichtet. Zur Abdichtung wird beispielsweise Graphit verwendet, welches eine hohe Temperaturbeständigkeit, eine hohe Medienbeständigkeit und eine hohe Montagesicherheit bietet. Darüber hinaus ermöglicht dies eine einfache Montage/Demontage des Sensors 1.1.1 durch die Aussparung 4.1. Zusätzliche Öffnungen zur Montage/Demontage des Sensors 1.1.1 sind nicht erforderlich.

Die Trägereinheit 1.2 ist im dritten Bereich III ortsfest, insbesondere ortsfest in Bezug auf das Gehäuse 4. Somit wird die Position der Trägereinheit 1.2 im dritten Bereich III bei einer Längenänderung der Trägereinheit 1.2 im flexiblen Bereich 1.2.2 nicht oder nur vernachlässigbar gering verändert.

Der flexible Bereich 1.2.2 ermöglicht somit eine Kompensation von Längenänderungen der Trägereinheit 1.2, welche insbesondere aus thermodynamischen Einflüssen im Hochdruckraum H resultieren. Die Position des Sensors 1.1.1 wird dadurch im Hochdruckraum H nicht oder nur vernachlässigbar gering verändert. Dies ermöglicht präzise Messungen einer absoluten Position des Objekts 2 im Hochdruckraum H. Zudem verläuft die Sensorleitung 1.1.2 in einem Niedrigdruckbereich innerhalb der Trägereinheit 1.2, so dass Druckänderungen im Hochdruckraum H keinen oder zumindest nur einen vernachlässigbar geringen Einfluss auf einen Druck innerhalb der Sensorleitung 1.1.2 ausüben. Das Risiko einer Beschädigung der Sensorleitung 1.1.2 wird damit minimiert.

Darüber hinaus können mittels des flexiblen Bereichs 1.2.2 Übertragungen von Vibrationen aus dem Bereich des Gehäuses 4 auf den Sensor 1.1.1 verringert werden.

Figur 2 zeigt ein alternatives Ausführungsbeispiel der Vorrichtung 1 in einer Schnittdarstellung.

Die Vorrichtung 1 umfasst analog zu dem in Figur 1 gezeigten Ausführungsbeispiel die Erfassungseinheit 1.1 und die Trägereinheit 1.2, welche durch die Aussparung 4.1 des Gehäuses 4 in den Hochdruckraum H eingeführt ist. Jedoch ist hier die Trägereinheit 1.2 zweiteilig ausgeführt und umfasst ein im Wesentlichen starres Trägerrohr 1.2.3 und ein Führungsrohr 1.2.4. Das Trägerrohr 1.2.3 ist in Form eines Rohrstempels ausgebildet. Das Trägerrohr 1.2.3 und das Führungsrohr 1.2.4 sind jeweils hohl ausgebildet und beispielsweise aus Metall gebildet. Das Führungsrohr 1.2.4 nimmt die Sensorleitung 1.1.2 auf und ist gemäß der in Figur 1 beschriebenen Trägereinheit 1.2 in drei Bereiche I bis III eingeteilt.

Im ersten Bereich I ist analog zum Ausführungsbeispiel in Figur 1 der Sensor 1.1.1 angeordnet. Insbesondere ist der Sensor 1.1.1 an einem Ende 1.2.4.1 des Führungsrohrs 1.2.4 befestigt. Der Sensor 1.1.1 ist hier näher dargestellt und umfasst einen Sensorkopf 1.1.1.1 und den Sensorträger 1.1.1.2, welcher den Sensorkopf 1.1.1.1 aufnimmt. In einem nicht gezeigten, alternativen Ausführungsbeispiel kann sich der Sensor 1.1.1 auch im Inneren einer Kammer befinden, wobei der Sensorkopf 1.1.1.1 aus dieser Kammer hinausragt. Das Ende 1.2.4.1 des Führungsrohrs 1.2.4 wird hier beispielsweise an einer bestimmten Stelle in die Kammer eingeführt und beispielsweise mittels einer hochdruckfesten Verschraubung, z. B. eine Schneid- oder Klemmringverschraubung, abgedichtet. Hierbei wirkt auf eine Sensorkopfrückseite ein Druck, welcher äquivalent zu einem innerhalb des Führungsrohrs 1.2.4 herrschenden Druck, insbesondere einem Druck der Umgebungsluft, ist.

Der Sensorkopf 1.1.1.1 umfasst beispielsweise einen oder mehrere Wirbelstromsensoren zur Erfassung des Positionssignals des Objekts 2. Dazu ist der Sensorkopf 1.1.1.1 im Abstand a zur Oberfläche des Objekts 2 positioniert und ortsfest im Hochdruckraum H angeordnet. Da das Positionssignal abhängig vom Abstand a ist, kann die absolute Position des Objekts 2 mittels des Sensors 1.1.1 berührungslos erfolgen. Der Sensorkopf 1.1.1.1 ragt von einem Sensorgehäuse 1.1.1.4 in Richtung des Objekts 2, wobei im gezeigten Ausführungsbeispiel der Sensorkopf 1.1.1.1 ausgehend von einer Kante des Sensorträgers 1.1.1.2, welcher hierbei als geschnittener Ring dargestellt ist, in einen Bereich 1.1.1.3 des Sensorträgers 1.1.1.2 in Richtung des Objekts 2 abragt.

Das Sensorgehäuse 1.1.1.4 ist gemäß dem gezeigten Ausführungsbeispiel zylindrisch ausgebildet und weist an einem in Richtung des Sensorkopfes 1.1.1.1 liegenden Bereich einen Kragen 1.1.1.1.1 auf, dessen Durchmesser gegenüber einem Durchmesser des Sensorgehäuses 1.1.1.4 und des Sensorkopfes 1.1.1.1 vergrößert ist. Alternativ sind auch Abmessungen des Kragens 1.1.1.1.1 ohne einen vergrößerten Durchmesser gegenüber dem Sensorgehäuse 1.1.1.4 möglich. Das Sensorgehäuse 1.1.1.4 umfasst in nicht näher gezeigter Weise ein Kontaktelement zur elektrischen Kontaktierung des Sensorkopfs 1.1.1.1 mit der Sensorleitung 1.1.2 und somit zur Weiterleitung des Positionssignals an die Auswerteeinheit 3.

Der Sensorträger 1.1.1.2 bildet einen mechanischen Träger für das Sensorgehäuse 1.1.1.4 und positioniert den Sensorkopf 1.1.1.1 stabil und ortsfest im Hochdruckraum H. Der Sensorträger 1.1.1.2 weist eine mit dem Kragen 1.1.1.1.1 korrespondierende Ausnehmung auf, wobei der Kragen 1.1.1.1.1 lose auf dem Sensorträger 1.1.1.2 aufliegt, und wobei der Sensorkopf 1.1.1.1 durch den Sensorträger 1.1.1.2 hindurch in Richtung des Objekts 2 ragt und wobei der Sensorkopf 1.1.1.1 mittels des Trägerrohrs 1.2.3 auf den Sensorträger 1.1.1.2 gedrückt wird. Dies wird später näher beschrieben.

Alternativ kann der Sensor 1.1.1 mit dem Sensorträger 1.1.1.2 verschraubt sein. Dazu weist der Sensor 1.1.1 ein Außengewinde und der Sensorträger 1.1.1.2 ein Innengewinde auf, welche form- und kraftschlüssig ineinander eingreifen. Zur Montage des Sensors 1.1.1 wird hierbei der Sensor 1.1.1 mittels eines Steckschlüssels mit dem Sensorträger 1.1.1.2 verschraubt. Bei dieser Ausführungsvariante ist die Anordnung des Trägerrohrs 1.2.3, des Federelements 1.3 und des Spannelements 1.4 nicht erforderlich.

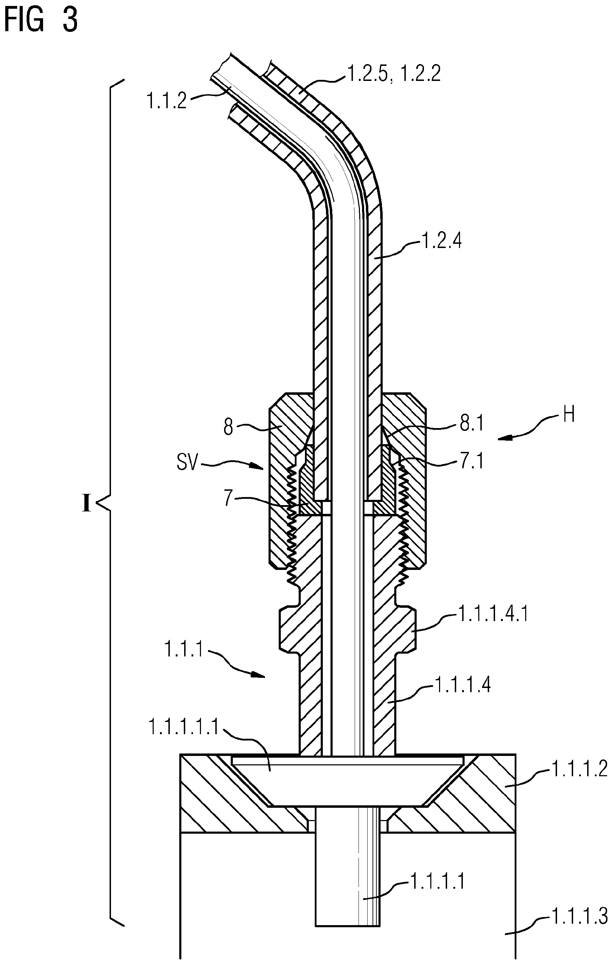

Des Weiteren ist der Sensor 1.1.1 rückseitig am Führungsrohr 1.2.4 befestigt. Insbesondere ist das Sensorgehäuse 1.1.1.4 rückseitig mit dem Führungsrohr 1.2.4 verschweißt. Alternativ kann der Sensorkopf 1.1.1.1 auch mit dem Führungsrohr 1.2.4 verklebt oder verschraubt (siehe Figur 3) sein. Des Weiteren kann das Führungsrohr 1.2.4 auch im/am Sensorträger 1.1.1.2 befestigt sein, z. B. mittels einer abdichtenden Verschraubung.

Das den Sensor 1.1.1 aufnehmende Ende 1.2.1 der Trägereinheit 1.2, hierbei das Führungsrohr 1.2.4, ist innerhalb des Trägerrohrs 1.2.3 angeordnet und wird durch eine im Trägerrohr 1.2.3 eingebrachte Öffnung 1.2.3.1 von außerhalb in das Trägerrohr 1.2.3 eingeführt.

Außerhalb des Trägerrohrs 1.2.3 verläuft gemäß dem gezeigten Ausführungsbeispiel ein als Rohrspirale ausgebildeter Abschnitt 1.2.5 des Führungsrohrs 1.2.4. Dieser Abschnitt 1.2.5 bildet den flexiblen Bereich 1.2.2 der Trägereinheit 1.2.

Der als Rohrspirale ausgebildete Abschnitt 1.2.5 ermöglicht eine elastische Struktur und befindet sich im zweiten Bereich II der Trägereinheit 1.2. Das starre Trägerrohr 1.2.3 dient der Sicherstellung der ortsfesten Position des Sensors 1.1.1 im Hochdruckraum H sowie einer mechanischen Stabilisierung des Führungsrohrs 1.2.4.

Der Abschnitt 1.2.5 ist spiralförmig um das Trägerrohr 1.2.3 angeordnet und an diesem befestigt. Beispielsweise ist der Abschnitt 1.2.5 mittels Klammern oder Stegen (nicht näher gezeigt) am Trägerrohr 1.2.3 befestigt, wodurch auf das Trägerrohr 1.2.3 übertragene Vibrationen kompensiert werden können.

Der Abschnitt 1.2.5 kann alternativ auch vollständig im Innenraum IR des Trägerrohrs 1.2.3 angeordnet sein, wobei in diesem Fall ein Durchmesser des Trägerrohrs 1.2.3 im Bereich des Abschnitts 1.2.5 gegebenenfalls größer ist als in anderen Bereichen des Trägerrohrs 1.2.3. Ist das Führungsrohr 1.2.4 vollständig im Innenraum IR des Trägerrohrs 1.2.3 angeordnet, kann auf Öffnungen oder Aussparungen zur Hindurchführung des Führungsrohrs 1.2.4 verzichtet werden.

Im dritten Bereich III ist das Führungsrohr 1.2.4 wieder innerhalb des Trägerrohrs 1.2.3 angeordnet und analog zum ersten Bereich I durch eine im Trägerrohr 1.2.3. eingebrachte Öffnung 1.2.3.1 hindurchgeführt. Das Führungsrohr 1.2.4 wird durch die Aussparung 4.1 des Gehäuses 4 hindurch in den Niederdruckraum N geführt.

Des Weiteren ist im dritten Bereich III ein Federelement 1.3 angeordnet, welches ein in der Aussparung 4.1 angeordnetes Ende des Trägerrohrs 1.2.3 mit einer Federkraft beaufschlagt. Mit anderen Worten: Das Trägerrohr 1.2.3 ist federbelastet. Damit wird eine einfache Montage/Demontage des Sensors 1.1.1 ermöglicht, da eine mechanische Verbindung des Sensorkopfs 1.1.1.1 mit dem Sensorträger 1.1.1.2 mittels der Federkraft hergestellt wird. Insbesondere wird der Sensorkopf 1.1.1.1 mittels des federbelasteten Trägerrohrs 1.2.3 auf den Sensorträger 1.1.1.2 gedrückt. Der Sensorkopf 1.1.1.1 und der Sensorträger 1.1.1.2 sind somit lose miteinander verbunden.

Das Federelement 1.3 ist beispielsweise eine Torsionsfeder, die mittels eines Spannelements 1.4, z. B. eine Federspannmutter, gespannt werden kann. Im gezeigten Ausführungsbeispiel ist das Spannelement 1.4 innerhalb der Aussparung 4.1 angeordnet, wobei die Aussparung 4.1 gegenüber dem in Figur 1 gezeigten Ausführungsbeispiel vergrößert ist. Das Spannelement 1.4 weist beispielsweise ein nicht dargestelltes Außengewinde auf, welches in ein in der Aussparung 4.1 eingebrachtes Innengewinde form- und kraftschlüssig eingreift. Beim Verschrauben des Spannelements 1.4 mit der Aussparung 4.1 wird das Spannelement 1.4 axial in Richtung des Trägerrohrs 1.2.3 bewegt, wodurch das Federelement 1.3 gespannt wird.

Das Führungsrohr 1.2.4 ist im dritten Bereich III durch das Gehäuse 4 hindurch geführt und mittels eines Flansches 5 form- und/oder kraft- und/oder stoffschlüssig mit dem Gehäuse 4 verbunden. Insbesondere ist das Führungsrohr 1.2.4 mittels einer abdichtenden Rohrverschraubung RV am Flansch 5 befestigt. Die Rohrverschraubung RV kann eine Schneid- oder Klemmringverschraubung sein und/oder eine Dichtung, z. B. eine Graphitbuchse, umfassen.

Der Flansch 5 ist gemäß dem gezeigten Ausführungsbeispiel mit dem Gehäuse 4 über Befestigungselemente 5.1, insbesondere Schrauben, verschraubt und weist eine zentrale Ausnehmung zur Hindurchführung des Führungsrohrs 1.2.4 auf. Im Bereich der Ausnehmung ist das Führungsrohr 1.2.4 am Flansch 5 mittels der gezeigten Rohrverschraubung RV befestigt. Alternativ kann das Führungsrohr 1.2.4 auch mit dem Flansch 5 verschweißt sein. Die Befestigung des Führungsrohrs 1.2.4 am Flansch 5 ermöglicht eine Montage/Demontage des Sensors 1.1.1 bei geschlossenem Gehäuse 4.

Der Flansch 5 ist gegenüber dem Gehäuse 4 abgedichtet. Dazu ist zwischen dem Flansch 5 und dem Gehäuse 4 ein Dichtelement 6 angeordnet oder eingebracht. Das Dichtelement 6 ist analog zum Dichtbereich 4.2 beispielsweise aus Graphit gebildet. Das Dichtelement 6 kann auf einer dem Gehäuse 4 zugewandten Oberflächenseite des Flansches 5 und/oder auf einer dem Flansch 5 zugewandten Oberflächenseite des Gehäuses 4 aufgebracht, insbesondere aufgeklebt, laminiert oder gespritzt sein. Bei der Befestigung des Flansches 5 am Gehäuse 4 wird das Dichtelement 6 komprimiert, so dass der Bereich zwischen Gehäuse 4 und Flansch 5 abgedichtet wird. Alternativ kann das Dichtelement 6 auch nach der Befestigung des Flansches 5 am Gehäuse 4 in den Bereich dazwischen eingebracht werden.

Die hier beschriebene Vorrichtung 1 ermöglicht analog zur Vorrichtung 1 aus Figur 1 eine Kompensation von Längenänderungen der Trägereinheit 1.2, welche insbesondere aus thermodynamischen Einflüssen im Hochdruckraum H resultieren. Insbesondere bildet hierbei der als Rohrspirale ausgebildete Abschnitt 1.2.5 den flexiblen Bereich 1.2.2, welcher aufgrund der Spiralform sich nach dem Prinzip einer Zugfeder oder Druckfeder verlängern oder verkürzen kann. Die Position des Sensors 1.1.1 wird dadurch im Hochdruckraum H nicht oder nur vernachlässigbar gering verändert. Die Position des Führungsrohrs 1.2.4 im dritten Bereich III wird ebenfalls nicht oder nur vernachlässigbar gering verändert.

Figur 3 zeigt eine Schnittdarstellung eines vergrößerten Ausschnitts der Vorrichtung 1 in einem weiteren alternativen Ausführungsbeispiel.

Der gezeigte Ausschnitt zeigt den ersten Bereich I der Trägereinheit 1.2 näher, welche analog zu der in Figur 2 beschriebenen Trägereinheit 1.2 ein Führungsrohr 1.2.4 mit einem als Rohrspirale ausgebildeten Abschnitt 1.2.5 zur Ausbildung des flexiblen Bereichs 1.2.2 aufweist. Das Trägerrohr 1.2.3 ist hier nicht dargestellt.

Gegenüber der in Figur 2 beschriebenen Trägereinheit 1.2 ist das Sensorgehäuse 1.1.1.4 nicht mit dem Führungsrohr 1.2.4 verschweißt, sondern mittels einer Schneidringverschraubung SV mit dem Führungsrohr 1.2.4 verbunden. Das gezeigte Sensorgehäuse 1.1.1.4 ist hierbei einstückig ausgebildet. Alternativ kann das Sensorgehäuse 1.1.1.4 auch aus mehreren, miteinander verschweißten Teilen bestehen.

Das Sensorgehäuse 1.1.1.4 weist eine Werkzeugangriffsfläche 1.1.1.4.1, hierbei ein Außensechskant, auf. Des Weiteren ist rückseitig am Sensorgehäuse 1.1.1.4 ein Schneidring 7 angeordnet, welcher ein Ende des Führungsrohrs 1.2.4 umschließt und stirnseitig am rückseitigen Ende des Sensorgehäuses 1.1.1.4 anliegt. Der Schneidring 7 besteht insbesondere aus einem Metall oder einer Metalllegierung.

Des Weiteren werden der Schneidring 7 und das rückseitige Ende des Sensorgehäuses 1.1.1.4 von einer Überwurfmutter 8 als Betätigungselement umschlossen. Die Überwurfmutter 8 weist ein Innengewinde auf, mit dem diese auf das Sensorgehäuse 1.1.1.4 und/oder das Führungsrohr 1.2.4 aufschraubbar ist. Das Sensorgehäuse 1.1.1.4 und/oder das Führungsrohr 1.2.4 weisen dazu ein korrespondierendes Außengewinde auf.

Bei der Montage der Vorrichtung 1 wird die Überwurfmutter 8 mittels eines Werkzeugs auf das Sensorgehäuse 1.1.1.4 und/oder das Führungsrohr 1.2.4 gedreht, insbesondere aufgeschraubt. Dabei wird der Schneidring 7 in axialer Richtung verspannt, wodurch sich dieser radial nach innen verformt und am Schneidring 7 angeordnete Schneidkanten unter Kerbwirkung insbesondere formschlüssig in das Material des Führungsrohrs 1.2.4 eindringen. Wie im Ausführungsbeispiel gezeigt, weist der Schneidring 7 eine sich endseitig konisch verjüngende Außenkonusfläche 7.1 auf, die an einer korrespondierenden Innenkonusfläche 8.1 der Überwurfmutter 8 anliegt. Hierdurch wird zusätzlich zum radialen Verpressen des Schneidrings 7 eine Keilwirkung erreicht.

Mittels der beschriebenen Schneidringverschraubung SV wird einerseits das Führungsrohr 1.2.4 mechanisch stabilisiert. Andererseits wird eine metallische Dichtfunktion über den Schneidring 7 erreicht. Zudem kann ein universeller oder baugleicher Sensor 1.1.1 verwendet werden, wobei das Führungsrohr 1.2.4 abhängig vom Einsatz hergestellt wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (1) zur Bestimmung einer Position eines in einem Hochdruckraum (H) bewegbaren Objekts (2), die Vorrichtung (1) umfassend
- eine Erfassungseinheit (1.1), die mindestens einen Sensor (1.1.1) zur Erfassung der Position des Objekts (2) und Ausgabe eines Positionssignals und eine Sensorleitung (1.1.2) zur Weiterleitung des Positionssignals an eine Auswerteeinheit (3) aufweist, und
- eine Trägereinheit (1.2) zur Aufnahme der Erfassungseinheit (1.1),
- wobei der Sensor (1.1.1) an einem dem Objekt (2) zuwendbaren und ortsfest im Hochdruckraum (H) anordenbaren Ende (1.2.1) der Trägereinheit (1.2) angeordnet ist,
- die Trägereinheit (1.2) einen flexiblen Bereich (1.2.2) aufweist, welcher zwischen dem ortsfesten Ende (1.2.1) und einem durch ein den Hochdruckraum (H) begrenzendes Gehäuse (4) führbaren Bereich (III) angeordnet ist,
- die Sensorleitung (1.1.2) der Erfassungseinheit (1.1) durch den flexiblen Bereich (1.2.2) geführt ist und vorgesehen ist, durch den durch das Gehäuse (4) verlaufenden Bereich (III) aus dem Hochdruckraum (H) heraus geführt zu werden, **dadurch gekennzeichnet, dass** der flexible Bereich (1.2.2) durch einen als Rohrspirale ausgebildeten Abschnitt (1.2.5) eines Führungsrohrs (1.2.4) gebildet ist, durch den die Sensorleitung (1.1.2) geführt ist.

2. Vorrichtung (1) nach Anspruch 1, wobei der flexible Bereich (1.2.2) in Bezug auf seine Länge eine Zugfeder oder Druckfeder bildet.

3. Vorrichtung (1) nach Anspruch 1 oder 2, wobei eine absolute Position des ortsfesten Endes (1.2.1) sowie eine absolute Position des durch das Gehäuse (4) führbaren Bereichs (III) der Trägereinheit (1.2) bei einer Längenänderung des flexiblen Bereichs (1.2.2) erhalten bleiben.

4. Vorrichtung (1) nach einem der vorhergehenden Ansprüche, wobei der als Rohrspirale ausgebildete Abschnitt (1.2.5) um ein und/oder in einem Trägerrohr (1.2.3), insbesondere um ein starres und/oder in einem starren Trägerrohr (1.2.3), angeordnet ist.

5. Vorrichtung (1) nach Anspruch 4, wobei der als Rohrspirale ausgebildete Abschnitt (1.2.5) flexibel am und/oder im Trägerrohr (1.2.3) befestigt ist.

6. Vorrichtung (1) nach einem der vorhergehenden Ansprüche, wobei an einem Ende (1.2.4.1) des Führungsrohrs (1.2.4) der Sensor (1.1.1) befestigt ist und dieses Ende (1.2.4.1) innerhalb des Trägerrohrs (1.2.3) angeordnet ist.

7. Vorrichtung (1) nach einem der vorhergehenden Ansprüche, wobei der Sensor (1.1.1) mit dem Führungsrohr (1.2.4) verschweißt, verklebt oder, insbesondere mittels einer Schneidringverschraubung (SV), verschraubt ist.

8. Vorrichtung (1) nach einem der Ansprüche 4 bis 7, wobei das Trägerrohr (1.2.3) federbelastet ist.

9. Vorrichtung (1) nach einem der vorhergehenden Ansprüche, wobei das Führungsrohr (1.2.4) durch das Gehäuse (4) hindurch führbar ist und mittels eines Flansches (5) form- und kraftschlüssig mit dem Gehäuse (4) verbindbar ist.

10. Vorrichtung (1) nach Anspruch 9, wobei der Flansch (5) gegenüber dem Gehäuse (4) abdichtbar ist.

11. Verwendung einer Vorrichtung (1) nach einem der vorhergehenden Ansprüche zur Bestimmung einer Position einer in einem Hochdruckraum (H) rotierbaren, magnetisch gelagerten Welle.

## Claims

1. Apparatus (1) for determining a position of a movable object (2) in a high pressure chamber (H), the apparatus (1) comprising
- a detecting unit (1.1) that has at least one sensor (1.1.1) for detecting the position of the object (2) and outputting a position signal, and a sensor cable (1.1.2) for relaying the position signal to an evaluating unit (3), and
- a carrier unit (1.2) for receiving the detecting unit (1.1),
- wherein the sensor (1.1.1) is arranged on an end (1.2.1) of the carrier unit (1.2) that can face the object (2) and that can be arranged stationary in the high pressure chamber (H),
- the carrier unit (1.2) has a flexible region (1.2.2) that is arranged between the stationary end (1.2.1) and a region (III) that can be guided through a housing (4) that delimits the high pressure chamber (H),
- the sensor cable (1.1.2) of the detecting unit (1.1) is guided through the flexible region (1.2.2) and is provided to be guided out of the high pressure chamber (H) through the region (III) that extends through the housing (4), **characterised in that** the flexible region (1.2.2) is formed by a section (1.2.5), which is embodied as a tube spiral, of a guiding tube (1.2.4) and the sensor cable (1.1.2) is guided through said guiding tube.

2. Apparatus (1) according to claim 1, wherein the flexible region (1.2.2) forms a tension spring or pressure spring in relation to the length of said flexible region.

3. Apparatus (1) according to claim 1 or 2, wherein an absolute position of the stationary end (1.2.1) and also an absolute position of the region (III), which can be guided through the housing (4), of the carrier unit (1.2), remain unchanged in the case of a change in length of the flexible region (1.2.2).

4. Apparatus (1) according to one of the preceding claims, wherein the section (1.2.5) that is embodied as a tube spiral is arranged around and/or in a carrier tube (1.2.3), in particular around a rigid and/or in a rigid carrier tube (1.2.3).

5. Apparatus (1) according to claim 4, wherein the section (1.2.5) that is embodied as a tube spiral is fastened to the and/or in the carrier tube (1.2.3) in a flexible manner.

6. Apparatus (1) according to one of the preceding claims, wherein the sensor (1.1.1) is fastened to one end (1.2.4.1) of the guiding tube (1.2.4) and this end (1.2.4.1) is arranged within the carrier tube (1.2.3).

7. Apparatus (1) according to one of the preceding claims, wherein the sensor (1.1.1) is welded, adhesively bonded or is screwed, in particular by means of a cutting ring fitting (SV), to the guiding tube (1.2.4).

8. Apparatus (1) according to one of claims 4 to 7, wherein the carrier tube (1.2.3) is spring loaded.

9. Apparatus (1) according to one of the preceding claims, wherein the guiding tube (1.2.4) can be guided through the housing (4) and can be connected to the housing (4) by means of a flange (5) in a positive-locking and non-positive locking manner.

10. Apparatus (1) according to claim 9, wherein the flange (5) can be sealed with respect to the housing (4).

11. Use of an apparatus (1) according to one of the preceding claims for determining a position of a rotatable shaft that is magnetically mounted in a high pressure chamber (H).

## Revendications

1. Dispositif (1) de détermination de la position d'un objet (2) pouvant se déplacer dans un espace (H) sous haute pression, le dispositif (1) comprenant
- une unité (1.1) de détection, qui a au moins un capteur (1.1.1) de détection de la position de l'objet (2) et d'émission d'un signal de position et une ligne (1.1.2) de capteur d'acheminement du signal de position à une unité (3) d'analyse, et
- une unité (1.2) de support, pour la réception de l'unité (1.1) de détection,
- dans lequel le capteur (1.1.1) de la position de l'objet est monté à un extrémité (1.2.1), pouvant être tournée vers l'objet (2) et pouvant être disposée d'une manière fixe en emplacement dans l'espace (H) sous haute pression, de l'unité (1.2) de support,
- l'unité (1.2) de support a une partie (1.2.2) souple, qui est disposée entre l'extrémité (1.2.1) fixe en emplacement et une partie (III) pouvant passer dans un boîtier (4) délimitant l'espace (H) sous haute pression,
- la ligne (1.1.2) de capteur de l'unité (1.1) de détection passe dans la partie (1.2.2) souple et est prévue pour être sortie de l'espace (H) sous haute pression par la partie (III) s'étendant dans le boîtier (4),
**caractérisé en ce que** la partie (1.2.2) souple est formée d'un tronçon (1.2.5), constitué sous la forme d'une spirale tubulaire, d'un tube (1.2.4) de guidage, dans lequel passe la ligne (1.1.2) de capteur.

2. Dispositif (1) suivant la revendication 1, dans lequel la partie (1.2.2) souple forme, rapporté à sa longueur, un ressort de traction ou un ressort de compression.

3. Dispositif (1) suivant la revendication 1 ou 2, dans lequel une position absolue de l'extrémité (1.2.1) fixe en emplacement, ainsi qu'une position absolue de la partie (III) pouvant passer dans le boîtier (4) de l'unité (1.2) de support reste conservée lors d'une modification de la longueur de la partie (1.2.2) souple.

4. Dispositif (1) suivant l'une des revendications précédentes, dans lequel le tronçon (1.2.5) constitué sous la forme d'une spirale tubulaire est disposé autour et/ou dans un tube (1.2.3) de support, notamment autour et/ou dans un tube (1.2.3) de support rigide.

5. Dispositif (1) suivant la revendication 4, dans lequel le tronçon (1.2.5), constitué sous la forme d'une spirale tubulaire, est fixé de manière souple sur et/ou dans le tube (1.2.3) de support.

6. Dispositif (1) suivant l'une des revendications précédentes, dans lequel le capteur (1.1.1) est fixé à un bout (1.2.4.1) du tube (1.2.4) de guidage du capteur et ce bout (1.2.4.1) est disposé à l'intérieur du tube (1.2.3) de support.

7. Dispositif (1) suivant l'une des revendications précédentes, dans lequel le capteur (1.1.1) est soudé, collé ou vissé, notamment au moyen d'un vissage (SV) auto-taraudant, au tube (1.2.4) de guidage.

8. Dispositif (1) suivant l'une des revendications 4 à 7, dans lequel le tube (1.2.3) de support est soumis à l'action d'un ressort.

9. Dispositif (1) suivant l'une des revendications précédentes, dans lequel le tube (1.2.4) de guidage peut passer dans le boîtier (4) et être relié au boîtier (4) à complémentarité de forme et à coopération de force au moyen d'une bride (5).

10. Dispositif (1) suivant la revendication 9, dans lequel la bride (5) peut être rendue étanche vis-à-vis du boîtier (4).

11. Utilisation d'un dispositif (1) suivant l'une des revendications précédentes, pour la détermination d'une position d'un arbre, monté magnétiquement, tournant dans un espace (H) sous haute pression.
